# EUROPÄISCHE PATENTSCHRIFT

(11) **EP 4 653 696 B1**
(45) Veröffentlichungstag und Bekanntmachung des Hinweises auf die Patenterteilung: **15.04.2026**
(21) Anmeldenummer: 24176957.9
(22) Anmeldetag: 21.05.2024
(51) Int. Cl.: F03D 17/00, F03D 80/40, G01S 7/48, G01S 17/42

(54) **WINDRAD MIT EINEM OPTISCHEN SENSOR**
WIND TURBINE WITH AN OPTICAL SENSOR
EOLIENNE AVEC UN CAPTEUR OPTIQUE

(43) Veröffentlichungstag der Anmeldung: 26.11.2025
(73) Patentinhaber: SICK AG, 79183 Waldkirch (DE)
(72) Erfinder: BALDISCHWEILER, Boris, 79194 Gundelfingen (DE); RINGWALD, Siegfried, 79215 Elzach (DE)
(74) Vertreter: Manitz Finsterwald Patent- und Rechtsanwaltspartnerschaft mbB

(56) Entgegenhaltungen:
- WO-A1-2013/149811
- DE-A1- 102019 120 632
- GB-A- 2 478 600
- US-A1- 2012 207 589
- US-A1- 2014 363 293

## Beschreibung

Die Erfindung betrifft ein Windrad mit einem optischen Sensor und ein Verfahren zum Betreiben eines solchen Windrades.

Windräder in Windkraftanlagen sind generell Umwelteinflüssen und Witterungsbedingungen ausgesetzt. Während des Betriebs eines Windrades können daher Wasser und bei niedrigen Temperaturen Eis an Rotorblättern des Windrades anhaften. Dadurch wird die Leistungsfähigkeit der Windkraftanlage beeinflusst und gegebenenfalls verringert. Im Extremfall können Beschädigungen auftreten.

Wenn sich eine Eisschicht an den Rotorblättern eines Windrades bildet, kann sich diese Eisschicht beispielsweise bei einem Temperaturanstieg von den Rotorblättern des Windrades lösen und in einem bestimmten Fallbereich unterhalb des Windrades aufschlagen. Dies wird als Eisbruch bezeichnet. Durch einen solchen Eisbruch ersteht eine erhebliche Gefahr für Personen und Objekte, die sich innerhalb des Fallbereichs unterhalb des Windrades befinden. Daher ist es üblich, Windräder rechtzeitig abzuschalten, wenn die Gefahr einer Eisbildung besteht.

Es sind Systeme bekannt, die zur Absicherung von Windkraftanlagen zwei Sensoren verwenden. Einer der Sensoren ermittelt, ob eine Vereisung an den Rotorblättern eines Windrades vorliegt, während ein weiterer Sensor den Fallbereich bzw. Gefahrenbereich unterhalb des Windrades bezüglich Personen und/oder Objekten überwacht. Eine Steuerung schaltet das Windrad ab, wenn sowohl eine Vereisung vorliegt als auch eine Person bzw. ein Objekt im überwachten Gefahrenbereich vorhanden ist. Darüber hinaus sind optische Systeme bekannt, die mehrere Wellenlängen im Infrarotbereich verwenden, um Eis nachzuweisen.

Ein Nachteil der bekannten Systeme besteht darin, dass mehrere Sensoren erforderlich sind, um ein Windrad sowohl bezüglich Eis an den Rotorblättern als auch bezüglich Personen bzw. Objekten unterhalb des Windrades zu überwachen. Ferner kann es für bekannte Systeme schwierig sein, eine nachgewiesene Eisschicht an einem Rotorblatt eines Windrades zuverlässig zu bewerten, beispielsweise bezüglich der Dicke der Eisschicht.

Aus der WO 2013/149811 A1 sind ein Windrad und Verfahren mit den Merkmalen gemäß dem jeweiligen Oberbegriff der unabhängigen Ansprüche bekannt.

In der US 2014/0363293 A1 sind ein Windrad und Verfahren mit Merkmalen gemäß einer verwandten Technologie beschrieben.

Eine Aufgabe der Erfindung besteht darin, ein Windrad mit einem optischen Sensor zu schaffen, der in der Lage ist, gleichzeitig Rotorblätter eines Windrades bezüglich eines vorbestimmten Fremdmaterials wie etwa Eis und einen vordefinierten Bereich unterhalb des Windrades bezüglich Objekten und Personen zu überwachen.

Diese Aufgabe wird durch ein Windrad sowie durch ein Verfahren mit den Merkmalen der jeweiligen unabhängigen Ansprüche gelöst. Vorteilhafte Weiterbildungen der Erfindung sind in den Unteransprüchen, der Beschreibung und den Zeichnungen angegeben.

Das Windrad umfasst einen Rotor mit mehreren Rotorblättern und einen optischen Sensor. Der optische Sensorumfasst eine Lichtquelle, die Licht in einen vorbestimmten Überwachungsbereich emittiert, und eine Empfangs- und Auswertungseinheit, die ausgebildet ist, mindestens ein Objekt innerhalb des Überwachungsbereichs anhand von empfangenem Licht nachzuweisen, das von der Lichtquelle emittiert und von dem Objekt remittiert (insbesondere reflektiert) wird. Die Lichtquelle ist ferner ausgebildet, Licht bei mindestens zwei verschiedenen Wellenlängen zu emittieren, während die Empfangs- und Auswertungseinheit zusätzlich ausgebildet ist, eine jeweilige Intensität des von dem Objekt remittierten Lichts für eine jeweilige der mindestens zwei Wellenlängen zu bestimmen und anhand des Verhältnisses mindestens zweier Intensitäten bei unterschiedlichen Wellenlängen mindestens ein vorbestimmtes Material an dem Objekt nachzuweisen.

Der optische Sensor ist derart an dem Windrad angebracht, dass der Überwachungsbereich des Sensors zumindest zeitweise ein vorbestimmtes Schutzfeld unterhalb des Rotors abdeckt. Während des Betriebs des Windrades befindet sich außerdem mindestens eines der mehreren Rotorblätter zumindest zeitweise in dem Überwachungsbereich des Sensors. Dadurch ist der Sensor in der Lage, mindestens ein vorbestimmtes Material an dem mindestens einen der mehreren Rotorblätter nachzuweisen. Das Windrad erfordert somit nur einen einzigen optischen Sensor, um gleichzeitig den vorbestimmten Bereich bzw. das Schutzfeld unterhalb des Rotors zu überwachen und ein vorbestimmtes Material wie etwa Wasser und/oder Eis an mindestens einem der Rotorblätter nachweisen zu können. Dadurch verringert sich der Aufwand für die Sensorik, die für einen sicheren Betrieb des Windrades erforderlich ist.

Das mindestens eine Objekt umfasst somit sowohl Personen als auch Gegenstände wie etwa Fahrzeuge in dem vorbestimmten Schutzfeld unterhalb des Windrades und außerdem auch das Rotorblatt des Windrades. Der Überwachungsbereich kann beispielsweise das vordefiniertes Schutzfeld unterhalb des Windrades permanent überdecken, und außerdem kann sich ein Rotorblatt des Windrades während dessen Betrieb durch den Überwachungsbereich des Sensors hindurchbewegen.

Der optische Sensor weist somit eine Doppelfunktion auf, da er einerseits das Vorhandensein von Objekten im Überwachungsbereich nachweist und andererseits eines oder mehrere Materialien an einem solchen Objekt detektieren kann, die beispielsweise Fremdmaterialien oder Fremdkörper an einem solchen Objekt sein können. Solche Fremdmaterialien sind insbesondere Wasser oder Eis, die sich beispielsweise an einem Rotorblatt eines Windrades als Objekt im Überwachungsbereich befinden können.

Da die Lichtquelle mindestens zwei verschiedene Wellenlängen emittiert und die Reflexion oder Remission des emittierten Lichts bei diesen verschiedenen Wellenlängen entsprechend ausgewertet wird, ist für den Nachweis von Objekten im Überwachungsbereich einerseits und für den Nachweis des mindestens einen vorbestimmten Materials, insbesondere Fremdmaterials, an solchen Objekten nur ein einziger optischer Sensor erforderlich. Dadurch werden die Kosten für die erforderliche Sensorik verringert, insbesondere während des Betriebs eines Windrades.

Da das mindestens eine Material vorbestimmt ist, bei dem es sich insbesondere um Wasser und/oder Eis handelt, können die mindestens zwei Wellenlängen aufgrund der Eigenschaften des Materials festgelegt werden. Dies erfolgt derart, dass das Verhältnis der mindestens zwei Lichtintensitäten, die aufgrund der Reflexion bzw. Remission von Licht bei diesen Wellenlängen erfasst werden, den Nachweis des mindestens einen vorbestimmten Materials gestattet.

Der Sensor kann für eine Laufzeitmessung in einem vorbestimmten Raumbereich in der Umgebung des optischen Sensors ausgebildet sein. Beispielsweise kann der Sensor einen Laserscanner umfassen, der eine dreidimensionale Abtastung des Überwachungsbereichs gestattet und insbesondere zur Abstandsmessung ausgebildet sein kann. Für jeden Punkt im dreidimensionalen Raum, an dem ein Objekt nachweisbar ist, kann der optische Sensor ferner das Vorhandensein des vorbestimmten Materials nachweisen.

Der optische Sensor kann ferner ein frequenzmoduliertes Dauerstrichsystem bzw. FMCW-System sein (FMCW von engl.: Frequency Modulated Continuous Wave). Beispielsweise kann ein FMCW-LIDAR-System eine Abstandsmessung zwischen dem Objekt und dem Sensor mit einer hohen Ortsauflösung ermöglichen. Ferner ermöglichen solche Systeme große Reichweiten bei geringem Störeinfluss. Darüber hinaus können optische FMCW-Systeme in einem Wellenlängenbereich im nahen Infrarot arbeiten, beispielsweise zwischen 1300 nm und 1800 nm, in welchem sich das Verhältnis der Remission von Licht beispielsweise für Wasser und Eis in Abhängigkeit von der Wellenlänge ändert, so dass der Nachweis dieser Materialien anhand der Intensitätsverhältnisse ermöglicht wird.

Gemäß einer Ausführungsform emittiert die Lichtquelle des optischen Sensors das Licht bei mindestens zwei diskreten, vorbestimmten Wellenlängen, während die Empfangs- und Auswertungseinheit ferner ausgebildet ist, Licht in einem Wellenlängenbereich nachzuweisen, der die mindestens zwei diskreten Wellenlängen der Lichtquelle umfasst. Mit anderen Worten kann die Empfangs- und Auswertungseinheit ausgebildet sein, Licht in einem breitbandigen Wellenlängenbereich zu empfangen und auszuwerten, der die mindestens zwei diskreten Wellenlängen enthält, bei denen die Lichtquelle das Licht emittiert. Die Empfangs- und Auswertungseinheit kann somit einen optisch breitbandigen Detektor umfassen, für den keine besonderen technischen Anforderungen bestehen und der daher kostengünstig ausgestaltet sein kann.

Alternativ kann die Lichtquelle das Licht in einem vorbestimmten breiten Wellenlängenbereich emittieren, während die Empfangs- und Auswertungseinheit ferner ausgebildet sein kann, Licht bei mindestens zwei diskreten, vorbestimmten Wellenlängen nachzuweisen, die innerhalb des Wellenlängenbereichs der Lichtquelle liegen. Bei dieser Ausführungsform umfasst die Empfangs- und Auswertungseinheit einen schmalbandigen und beispielsweise durchstimmbaren Detektor, der beispielsweise Filter aufweist, die nur in einem engen Bereich um die mindestens zwei vorbestimmten Wellenlängen herum durchlässig sind, während eine bezüglich der Wellenlänge breitbandige Beleuchtung mittels der Lichtquelle erfolgt. Dadurch bestehen bei dieser Ausführungsform geringe Anforderungen an die Lichtquelle, während die Festlegung der mindestens zwei diskreten, vorbestimmten Wellenlängen zum Nachweis des vorbestimmten Materials an einem Objekt innerhalb der Empfangs- und Auswertungseinheit erfolgt.

Ferner können die mindestens zwei diskreten, vorbestimmten Wellenlängen derart ausgewählt sein, dass die Empfangs- und Auswertungseinheit in der Lage ist, anhand des Verhältnisses der mindestens zwei Intensitäten bei den mindestens zwei Wellenlängen mindestens zwei Arten des vorbestimmten Materials bzw. zwei vorbestimmte Materialien an dem Objekt nachzuweisen. Beispielsweise kann die Remission von Licht bei den mindestens zwei diskreten, vorbestimmten Wellenlängen für die verschiedenen Arten des Materials bzw. verschiedenen Materialien unterschiedlich sein, beispielsweise für Wasser und Eis.

Der Sensor kann demnach so ausgestaltet sein, dass er in der Lage ist, die Remission von Licht bei Wasser und Eis als die verschiedenen Arten des Materials zu detektieren. Wie vorstehend bereits erwähnt wurde, ändert sich das Verhältnis der Remission von Licht für Wasser und Eis im nahen Infrarot, beispielsweise zwischen 1300 und 1800 nm, so dass das Verhältnis zweier Lichtintensitäten innerhalb dieses Wellenlängenbereichs den Nachweis von Wasser und Eis an einem Objekt gestattet.

Gemäß einer weiteren Ausführungsform kann die Empfangs- und Auswertungseinheit ferner ausgebildet sein, ein Objekt zu klassifizieren, wenn das Objekt in dem Überwachungsbereich des Sensors nachweisbar ist. Mit anderen Worten kann ein nachgewiesenes Objekt einer von mehreren Objektklassen zugeordnet werden.

Solche Objektklassen können beispielsweise eine Objektklasse für Personen, eine Objektklasse für Fahrzeuge und weitere Objektklassen für andere Gegenstände umfassen. Wenn der optische Sensor für eine Laufzeitmessung in einem vorbestimmten Raumbereich ausgebildet ist, d.h. beispielsweise als entsprechend ausgestalteter Laserscanner, als TOF-Kamera (TOF von Engl.: Time Of Flight) oder als ein FMCW-LIDAR-System, ermöglicht die dreidimensionale Erfassung von Objektpunkten beispielsweise eine Zuordnung zu bekannten Objektmustern im Sinne einer Objekterkennung, die mittels der Empfangs- und Auswertungseinheit durchgeführt werden kann. Anhand der Erkennung einer vorbestimmten Kontur und/oder von Abmessungen eines Objekts in einem vorbestimmten Bereich kann eine Zuordnung eines Objekts zu einer bestimmten Objektklasse erfolgen. Beispielsweise ist es bei einer Objektlänge von 5 m sehr wahrscheinlich, dass es sich bei dem Objekt um ein Fahrzeug und nicht um eine Person handelt.

Gemäß einer weiteren Ausführungsform umfasst der optische Sensor einen optischen Scanner, insbesondere einen Laserscanner.

Gemäß einer weiteren Ausführungsform des Windrades ist der optische Sensor an einem statischen Element des Windrades angebracht. Der Sensor kann beispielsweise im Bereich einer Drehachse des Rotors, beispielsweise an einer Halterung im Bereich von dessen Lagerung, befestigt sein. Der Sensor kann dabei derart ausgerichtet sein, dass der Überwachungsbereich des Sensors unterhalb des Rotors des Windrades eine vorbestimmte Fläche am Boden unterhalb des Windrades abdeckt.

Zusätzlich ist es bei dieser Ausführungsform erforderlich, dass der optische Sensor zumindest ein Rotorblatt des Windrades zumindest teilweise "sieht", d.h. dass sich das Rotorblatt für einen vorbestimmten Zeitraum innerhalb des Überwachungsbereichs des optischen Sensors befindet und diesen beispielsweise durchstreift. Wenn die Zeitdauer erfasst wird, die ein Rotorblatt für das Durchstreifen des Überwachungsbereichs benötigt, und die Abmessungen des Überwachungsbereichs bekannt sind, kann anhand der Zeitdauer eine sogenannte "Durchstreifungsgeschwindigkeit" des Rotorblattes durch den Überwachungsbereich hindurch ermittelt werden, welche wiederum die Ermittlung der Drehgeschwindigkeit des Rotors des Windrades gestatten kann.

Alternativ kann der optische Sensor an einem der mehreren Rotorblätter angebracht sein. Bei einer Ausführungsform kann der optische Sensor an einem inneren Ende eines der mehreren Rotorblätter angebracht sein. Das innere Ende kann sich in der Nähe der Drehachse des Rotors befinden, so dass der Überwachungsbereich des Sensors beispielsweise nahezu eine Seite eines Rotorblattes permanent umfasst. Da sich der optische Sensor bei dieser Ausführungsform mit dem Rotorblatt dreht, an welchem er angebracht ist, überstreicht der optische Sensor bzw. dessen Überwachungsbereich innerhalb eines bestimmten Zeitraums während der Drehung des Rotors ein vorbestimmtes Schutzfeld am Boden unterhalb des Windrades. Dieses Schutzfeld kann durch die Reichweite des optischen Sensors festgelegt sein, der die Grenze bzw. maximale Entfernung eines Objekts für den Überwachungsbereich festlegt.

Das vorbestimmte Schutzfeld unterhalb des Rotors des Windrades kann somit durch eine Überlagerung des Überwachungsbereichs des Sensors bei dessen Drehung zusammen mit dem Rotorblatt und einer Ebene im Bereich des Bodens unterhalb des Windrades definiert sein. Mit anderen Worten kann das Schutzfeld dadurch festgelegt sein, dass ein Sichtfeld des optischen Sensors, das dessen Überwachungsbereich bestimmt, während der Drehung des Sensors zusammen mit dem Rotor eine bestimmte Fläche am Boden überstreicht.

Bei einer alternativen Ausführungsform ist der optische Sensor an einem äußeren Ende eines der mehreren Rotorblätter angebracht. Das äußere Ende des Rotorblattes befindet sich an dessen Spitze, welche die größte Entfernung von der Drehachse des Rotors aufweist. Bei dieser Ausführungsform ist es jedoch erforderlich, dass zumindest ein Teil des Rotorblattes für den Sensor sichtbar ist, auch wenn dieser an dem äußeren Ende dieses Rotorblattes angebracht ist, und dass der Sensor derart ausgerichtet ist, dass er für einen vorbestimmten Zeitraum ein vorbestimmtes Schutzfeld unterhalb des Rotors überwachen kann. Die Anbringung des optischen Sensors an einem äußeren Ende des Rotorblattes hat den Vorteil, dass eine geringe Reichweite des optischen Sensors aufgrund einer relativ kurzen Distanz bis zum Boden erforderlich ist, wenn sich das Rotorblatt an seiner tiefsten Position über dem Boden befindet. Die Reichweite des optischen Sensors kann also bei dieser Ausführungsform geringer sein als bei derjenigen Ausführungsform, bei welcher der optische Sensor an einem inneren Ende eines der mehreren Rotorblätter angebracht ist.

Der Sensor kann ferner derart ausgestaltet sein, dass er in der Lage ist, die Remission von Licht für Wasser und Eis zu detektieren. Die mindestens zwei Wellenlängen, bei denen der optische Sensor Licht emittieren bzw. detektieren kann, sind bei dieser Ausführungsform folglich derart ausgewählt, dass die Remission von Licht für Wasser und Eis bei diesen vorbestimmten Wellenlängen unterschiedlich ist. Dadurch können Wasser und Eis aufgrund des Intensitätsverhältnisses bei diesen ausgewählten Wellenlängen nachgewiesen werden.

Der optische Sensor kann ferner ausgebildet sein, eine Dicke einer Eisschicht an einem der mehreren Rotorblätter unter Berücksichtigung einer Referenzmessung zu bestimmen. Die Referenzmessung kann beispielsweise unter Bedingungen erfolgen, für die sichergestellt ist, dass sich kein Eis an einem der Rotorblätter des Windrades befindet. In Abhängigkeit von der Dicke der Eisschicht kann der optische Sensor ferner ein Warnsignal ausgeben, das während des Betriebs des Windrades berücksichtigt werden kann. Alternativ kann eine Überwachung des Bereichs unterhalb des Windrads bezüglich des Vorhandenseins von Objekten auch erst dann aktiviert werden, wenn der die Dicke der Eisschicht an einem der Rotorblätter einen vorbestimmten Wert überschreitet. Der Sensor vermisst bei einer Referenzmessung ohne Eis zum Beispiel die Abstände zum Rotorblatt und hat dann einen Referenzwert, auf dessen Grundlage er die aktuelle Schichtdicke messen kann.

Ein jeweiliger optischer Sensor, wie dieser vorstehend beschrieben ist, kann ferner an mehreren, vorzugsweise an allen Rotorblättern des Windrades vorgesehen sein. Mit mehreren optischen Sensoren an jeweiligen Rotorblättern kann die Zuverlässigkeit verbessert werden, mit der das mindestens eine vorbestimmte Material, insbesondere Eis, an den Rotorblättern nachgewiesen werden kann. Ferner kann der vorbestimmte Bereich unterhalb des Windrades zuverlässiger überwacht werden als bei der Verwendung eines optischen Sensors an nur einem Rotorblatt, da der vorbestimmte Bereich häufiger bzw. mit einer höheren Frequenz von den optischen Sensoren überstrichen wird. Umgekehrt ist das Zeitintervall, in welchem kein Sensor den vorbestimmten Bereich abdeckt bzw. überstreicht, bei der Verwendung mehrerer Sensoren an jeweiligen Rotorblättern kürzer als bei der Verwendung eines Sensors an nur einem Rotorblatt.

Weiterer Gegenstand der Erfindung ist ferner ein Verfahren zum Betreiben eines Windrades, wie es vorstehend beschrieben ist. Das Verfahren umfasst, dass mittels des optischen Sensors einerseits ein vorbestimmtes Schutzfeld unterhalb des Rotors des Windrades bezüglich des Vorhandenseins mindestens eines Objekts überwacht wird und andererseits mindestens eines der Rotorblätter des Rotors des Windrades bezüglich des Vorhandenseins eines vorbestimmten Materials, insbesondere von Eis, überwacht wird.

Das Verfahren ist folglich für den Betrieb des vorstehend beschriebenen Windrades vorgesehen. Daher gelten für das Verfahren die Ausführungen zum Windrad entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Das Verfahren nutzt wiederum die vorstehend beschriebene Doppelfunktion des optischen Sensors aus, wonach gleichzeitig eine Überwachung des vorbestimmten Schutzfeldes unterhalb des Rotors des Windrades bezüglich Objekten und eine Überwachung bzw. ein Nachweis eines vorbestimmten Materials an einem der Rotorblätter erfolgt. Das vorbestimmte Schutzfeld kann entweder permanent von dem Überwachungsbereich des Sensors abgedeckt sein, wenn dieser an einem statischen Element des Windrades installiert ist, oder es kann das vorbestimmte Schutzfeld dadurch festgelegt sein, dass der Überwachungsbereich des optischen Sensors eine bestimmte Fläche unterhalb des Rotors des Windrades während eines vorbestimmten Zeitraums überstreicht. Das vorbestimmte Schutzfeld ist somit durch den Überwachungsbereich des optischen Sensors und durch die spezifische Art der Installation des Sensors am Windrad vorgegeben.

Gemäß einer Ausführungsform des Verfahrens wird die Überwachung des Schutzfelds unterhalb des Rotors des Windrades bezüglich des Vorhandenseins mindestens eines Objekts erst bei Vorhandensein des vorbestimmten Materials, insbesondere von Eis, durchgeführt bzw. aktiviert.

Gemäß einer weiteren Ausführungsform des Verfahrens wird bei Vorhandensein sowohl des vorbestimmten Materials, bei dem es sich insbesondere um Eis handelt, an dem mindestens einen Rotorblatt als auch bei Vorhandensein des mindestens einen Objekts in dem Schutzfeld ermittelt, ob das Windrad abzuschalten ist. Die Abschaltung des Windrades kann gemäß dieser Ausführungsform somit dann erfolgen, wenn zwei Bedingungen erfüllt sind, und zwar dann, wenn das vorbestimmte Material wie etwa Eis an dem Rotorblatt nachgewiesen wird und sich gleichzeitig ein Objekt innerhalb des Schutzfeldes befindet.

Die Abschaltung des Windrades kann ferner auch bei einem Nachweis von Eis erfolgen, wenn gleichzeitig weitere Bedingungen erfüllt sind. Beispielsweise kann die Dicke einer Eisschicht ermittelt werden, um das Windrad abzuschalten, wenn diese Dicke einen vorbestimmten Wert überschreitet. Ferner kann wiederum eine Klassifizierung von Objekten innerhalb des Überwachungsbereichs bzw. des Schutzfeldes des Sensors durchgeführt werden, und das Windrad kann dann abgeschaltet werden, wenn sich ein bestimmter Objekttyp wie etwa eine Person innerhalb des Schutzfeldes befindet.

Ferner können Signale weiterer Sensoren, beispielsweise für die Luftfeuchtigkeit, den Luftdruck und die Lufttemperatur, bei einer Entscheidung berücksichtigt werden, ob das Windrad abgeschaltet werden soll. Außerdem kann gemäß dem Verfahren eine Warnung in Abhängigkeit von der Dicke einer Eisschicht an einem der Rotorblätter ausgegeben werden. Wenn beispielsweise aufgrund der Umweltbedingungen des Windrades, d.h. aufgrund der Luftfeuchtigkeit, des Luftdrucks und der Lufttemperatur, eine geringe Wahrscheinlichkeit für einen Eisbruch ermittelt wird, d.h. für das Herabfallen von Eis von den Rotorblättern des Windrades, und wenn gleichzeitig eine geringe Masse bzw. Dicke von Eis an einem der Rotorblätter des Windrades nachgewiesen wird, kann das Windrad auch dann weiterhin betrieben werden, wenn sich lediglich ein Fahrzeug, aber keine Person innerhalb des Schutzfeldes befindet. Wird hingegen eine Person innerhalb des Schutzfeldes unter den gleichen Umweltbedingungen nachgewiesen, sollte das Windrad abgeschaltet werden, da auch das Herabfallen von kleinen Eisstücken von den Rotorblättern des Windrades erhebliche Verletzungen einer Person nach sich ziehen kann.

Wenn ferner gemäß einer Ausführungsform sowohl die Dicke einer Eisschicht an einem der Rotorblätter des Windrades als auch die Drehgeschwindigkeit des Rotors des Windrades ermittelt werden, letztere beispielsweise anhand der vorstehend beschriebenen "Durchstreifungsgeschwindigkeit" des Rotors durch den Überwachungsbereich des Sensors, kann die Größe des Schutzfeldes unterhalb des Rotors anhand der Drehgeschwindigkeit und der Dicke der Eisschicht angepasst werden. Beispielsweise kann das Schutzfeld bei einer geringen Drehgeschwindigkeit und/oder bei einer geringen oder vernachlässigbaren Dicke der Eisschicht kleiner sein als bei einer hohen Drehgeschwindigkeit des Rotors oder einer erheblichen Dicke der Eisschicht.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: einen optischen Sensor,
- Fig. 2: ein erfindungsgemäßes Windrad mit dem Sensor von Fig. 1 und
- Fig. 3A und 3B: zwei Ausführungsformen, bei denen der optische Sensor von Fig. 1 jeweils auf unterschiedliche Weise an einem Rotorblatt eines Windrades angebracht ist.

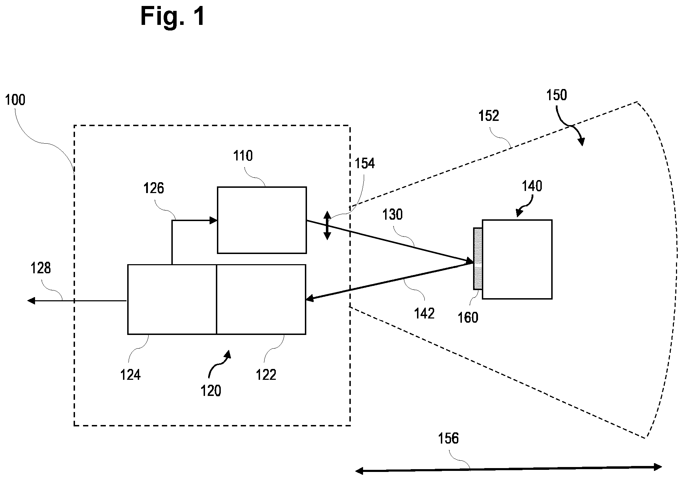

Fig. 1 zeigt eine schematische Darstellung eines optischen Sensors 100, der eine Lichtquelle 110 sowie eine Empfangs- und Auswertungseinheit 120 umfasst. Die Empfangs- und Auswerteeinheit 120 umfasst wiederum einen Empfangsteil 122, der ausgebildet ist, einfallendes Licht zu detektieren und in ein entsprechendes elektrisches Signal umzuwandeln, und einen Auswertungsteil 124. Der Auswertungsteil 124 ist dafür vorgesehen, ein Steuersignal 126 zum Steuern der Lichtquelle 110 auszugeben. Ferner gibt der Auswertungsteil 124 ein Ausgangssignal 128 des optischen Sensors 100 aus.

Die Lichtquelle 110 emittiert Licht in der Form eines Laserstrahls 130 in die Umgebung des optischen Sensors 100. Das emittierte Licht kann von einem Objekt 140 remittiert bzw. reflektiert werden, so dass ein remittierter bzw. reflektierter Anteil des von der Lichtquelle 110 emittierten Laserstrahls 130 als empfangenes Licht 142 auf den Empfangsteil 122 der Empfangs- und Auswertungseinheit 120 trifft.

Dem optischen Sensor 100 ist ferner ein vorbestimmter Überwachungsbereich 150 zugeordnet, dessen Grenzen 152 durch gestrichelte Linien schematisch angedeutet ist. Die Lichtquelle 110 emittiert Licht in den vorbestimmten Überwachungsbereich 150, indem die Richtung des Laserstrahls 130 verändert wird, wie dies durch den Pfeil 154 angedeutet ist. Durch die Ablenkung des Laserstrahls 130 überstreicht dieser den vorbestimmten Überwachungsbereich 150, aus dem die Empfangseinheit 122 das remittierte bzw. reflektierte Licht 142 empfängt. Der Überwachungsbereich 150 ist also durch den Raumbereich definiert, in welchen die Lichtquelle 110 den Laserstrahl 130 emittiert und aus welchem gleichzeitig der Empfangsteil 122 der Empfangs- und Auswertungseinheit 120 das remittierte bzw. reflektierte Licht 142 empfangen kann. Der vorbestimmte Überwachungsbereich 150 ist in Blickrichtung des optischen Sensors 100 durch die Reichweite der Lichtquelle 110 begrenzt, wie diese schematisch durch den Pfeil 156 angedeutet ist.

Der optische Sensor 100 ist dafür vorgesehen, mittels der Empfangs- und Auswertungseinheit 120 Objekte, wie beispielsweise das Objekt 140, innerhalb des Überwachungsbereichs 150 anhand des empfangenen Lichts 142 nachzuweisen, dass von der Lichtquelle 110 emittiert und an dem Objekt 140 remittiert bzw. reflektiert wird. Darüber hinaus ist die Lichtquelle 110 dafür vorgesehen, das Licht bzw. den Laserstrahl 130 bei mindestens zwei verschiedenen Wellenlängen zu emittieren. Die Empfangs- und Auswertungseinheit 120 ist entsprechend dafür vorgesehen, die Intensität des remittierten bzw. reflektierten Lichts 142 für eine jeweilige der mindestens zwei Wellenlängen zu bestimmen. Anhand des Verhältnisses mindestens zweier Intensitäten des remittierten bzw. reflektierten Lichts bei den mindestens zwei verschiedenen Wellenlängen kann die Empfangs- und Auswertungseinheit 120 mindestens ein vorbestimmtes Material bzw. Fremdmaterial 160 an dem Objekt 140 nachweisen.

Um das mindestens eine Material bzw. Fremdmaterial 160 an dem Objekt 140 nachzuweisen, werden die mindestens zwei Wellenlängen, bei denen die Lichtquelle 110 Licht in Form des Laserstrahls 130 emittiert, derart ausgewählt, dass die Remission bzw. Reflexion von Licht an dem Fremdmaterial 160, dessen Nachweis gewünscht ist, unterschiedlich ist. Das Material 160 weist dann also bei den mindestens zwei Wellenlängen ein bekanntes Remissionsverhältnis auf.

Wenn es sich bei dem Fremdmaterial 160, das gegebenenfalls mit dem Sensor nachgewiesen werden soll, beispielsweise um Eis handelt, d.h. wenn eine Eisschicht an dem Objekt 140 nachgewiesen werden soll, sind Wellenlängen im nahen Infrarot zwischen 1300 nm und 1800 nm für den Nachweis von Eis geeignet, da sich in diesem Wellenlängenbereich das Remissionsverhältnis beispielsweise zwischen Wasser und Eis in Abhängigkeit von der Wellenlänge verändert. Anhand der Auswertung der Intensitätsunterschiede, die mittels der Empfangs- und Auswertungseinheit 120 bei den mindestens zwei Wellenlängen bestimmt werden, kann der optische Sensor 100 nicht nur das Vorhandensein eines Objekts 140 innerhalb des Überwachungsbereichs 150 nachweisen und dessen räumliche Lage ermitteln, sondern zusätzlich das Fremdmaterial 160, beispielsweise Eis, an dem Objekt 140 erkennen.

Der optische Sensor 100 arbeitet nach dem Prinzip eines Laserscanners. Ferner kann der optische Sensor 100 entweder zum Beispiel als TOF-Kamera (TOF von engl.: Time Of Flight), bei der Laufzeitmessungen durchgeführt werden, oder als ein frequenzmoduliertes Dauerstrich-LIDAR-System (FMCW-LIDAR-System, FMCW von engl.: Frequency Modulated Continuous Wave) ausgebildet sein. Solche Varianten des optischen Sensors 100 gestatten eine Abstandsmessung in einem vorbestimmten dreidimensionalen Raumbereich, d.h. in dem Überwachungsbereich 150 des optischen Sensors 100.

Durch Vergleich mit einer Referenzmessung ist es ferner möglich, die Dicke des Fremdmaterials 160 an dem Objekt 140 zu ermitteln, beispielsweise die Dicke einer Eisschicht. Die Referenzmessung erfolgt unter Bedingungen, bei denen sichergestellt ist, dass sich kein Fremdmaterial 160 an dem Objekt 140 befindet. Wenn zudem bekannt ist, dass sich das Objekt 140 bei Vorhandensein des Fremdmaterials 160 an der gleichen Position befindet wie während der Referenzmessung, lässt sich die Dicke des Fremdmaterials 160 anhand einer Messung mittels einer TOF-Kamera oder eines FMCW-LIDAR-Systems dadurch ermitteln, dass eine solche Messung die räumliche Lage bzw. dreidimensionale Position der Oberfläche des Fremdmaterials 160 bestimmt, die dem optischen Sensor 100 zugewandt ist. Da die Referenzmessung die räumliche Lage der entsprechenden Oberfläche des Objekts 140 ohne das Fremdmaterial 160 bereitstellt, lässt sich anhand eines Vergleichs der beiden Messungen die Dicke des Fremdmaterials 160 an dem Objekt 140 ermitteln.

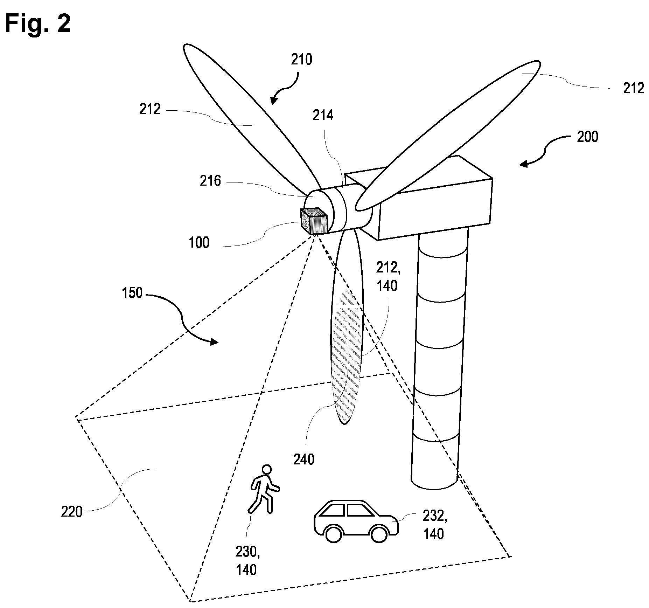

In Fig. 2 ist schematisch ein Windrad 200 dargestellt, an dem ein optischer Sensor 100 angebracht ist, wie dieser vorstehend beschrieben ist. Das Windrad 200 umfasst einen Rotor 210 mit Rotorblättern 212, die zur Drehung an einer Rotorwelle 214 angebracht sind.

Der optische Sensor 100 arbeitet nach dem Prinzip eines Laserscanners. Er tastet somit den Überwachungsbereich 150 beispielsweise durch eine Ablenkung des Laserstrahls 130 periodisch ab, den die Lichtquelle 110 emittiert. Der Überwachungsbereich 150 des optischen Sensors 100 ist somit dadurch festgelegt, dass die Ablenkung des Laserstrahls 130 derart gesteuert wird, dass dieser den gewünschten Überwachungsbereich 150 überstreicht.

Der optische Sensor 100 ist an einer Halterung 216 als Teil des Windrades 200 angebracht, die derart konstruiert ist, dass der optische Sensor 100 bzw. der Überwachungsbereich 150, der dem optische Sensor 100 zugeordnet ist, stets in die gleiche Richtung nach unten in Richtung des Bodens unterhalb des Windrades 200 bzw. des Rotors 210 ausgerichtet ist. Während des Betriebs des Windrades 200 mit drehendem Rotor 210 dreht sich der optische Sensor 100 daher bei der Ausführungsform von Fig. 2 nicht mit dem Rotor 210 mit, so dass der Überwachungsbereich 150 des Sensors 100 als ortsfest anzusehen ist und ein Schutzfeld 220 unterhalb des Rotors 210 des Windrades 200 festlegt.

Wie im Zusammenhang mit Fig. 1 beschrieben ist, ist der Sensor 100 ausgebildet, Objekte 140 innerhalb des Überwachungsbereichs 150 bzw. des Schutzfeldes 220 unterhalb des Rotors 210 nachzuweisen. In Fig. 2 sind eine Person 230 und ein Fahrzeug 232 als Beispiele für Objekte 140 dargestellt, die sich am Boden unterhalb des Windrades 200 innerhalb des Schutzfeldes 220 befinden. Ferner stellen auch die Rotorblätter 212 Objekte 140 dar, die für den Sensor 100 sichtbar bzw. nachweisbar sind, sobald sich ein jeweiliges der Rotorblätter 212 bei einer Drehung des Rotors 210 innerhalb des Überwachungsbereichs 150 befindet. Während der Drehung des Rotors 210 durchstreift somit das jeweilige Rotorblatt 212 den Überwachungsbereich 150 des Sensors 100 während eines bestimmten Zeitraums, der durch die Drehgeschwindigkeit des Rotors 210 festgelegt ist. Während dieses Zeitraums befindet sich eine Fläche bzw. ein Abschnitt 240 des jeweiligen Rotorblatts 212 innerhalb des Überwachungsbereichs 150 des Sensors 100.

Da der Sensor 100 mindestens zwei Wellenlängen im Bereich zwischen 1300 nm und 1800 nm emittiert, ist der Sensor 100 in der Lage, nicht nur das Vorhandensein des Rotorblatts 212 innerhalb des Überwachungsbereichs 150 nachzuweisen, sondern auch das Vorhandensein und die Dicke einer Schicht eines Fremdmaterials 160 (vgl. Fig. 1) wie etwa Eis an dem Rotorblatt 212. Der optische Sensor 100 kann also zusätzlich zum Vorhandensein von Objekten 140 innerhalb des Überwachungsbereichs eine Eisschicht an dem Rotorblatt 212 nachweisen.

Wie vorstehend erläutert, kann der optische Sensor 100 außerdem anhand einer Referenzmessung die Dicke einer solchen Eisschicht an dem Rotorblatt 212 bestimmen. Zu diesem Zweck erfolgt eine Referenzmessung unter Bedingungen, für die sichergestellt ist, dass sich keine Eisschicht an den Rotorblättern 212 befindet. Solche Bedingungen können beispielsweise anhand der Luftfeuchtigkeit, der Lufttemperatur und des Luftdrucks festgelegt werden, wenn diese Größen mittels einer zusätzlichen Sensorik erfasst werden.

Die Überwachung des Schutzfelds 220 unterhalb des Rotors 210 des Windrades 200 bezüglich des Vorhandenseins mindestens eines Objekts 140 kann beispielsweise auch nur dann aktiviert werden, wenn das Fremdmaterial 160, bei dem es sich insbesondere um Eis handelt, an mindestens einem der Rotorblätter 212 nachgewiesen wird. Außerdem kann die Überwachung des Schutzfelds 220 selbst bei einem Nachweis von Eis an einem der Rotorblätter 212 zum Beispiel auch erst dann aktiviert werden, wenn die Dicke der Eisschicht einen vorbestimmten Wert überschreitet.

Außerdem kann die Zeitdauer gemessen werden, während der eines der Rotorblätter 212 durch den Überwachungsbereich 150 des Sensors 100 hindurchtritt und somit für den optischen Sensor 100 sichtbar ist. Wenn die Abmessungen des Überwachungsbereichs 150 des optischen Sensors 100 bekannt sind, kann daher eine sogenannte "Durchstreifungsgeschwindigkeit" des Rotorblatts 212 durch den Überwachungsbereich 150 und folglich die Drehgeschwindigkeit des Rotors 210 ermittelt werden.

Anhand der ermittelten Drehgeschwindigkeit des Rotors 210 und der Dicke des Fremdmaterials 160 bzw. der Eisschicht an den Rotorblättern 212 kann ferner die Größe des Schutzfeldes 220 angepasst werden. Beispielsweise kann bei einer hohen Drehgeschwindigkeit des Rotors 210 ein größeres Schutzfeld 220 eingestellt werden als bei geringen Drehgeschwindigkeiten des Rotors 210. Ebenso kann das Schutzfeld 220 vergrößert werden, wenn eine bestimmte Dicke der Eisschicht an einem der Rotorblätter 212 überschritten wird. Die Anpassung der Größe des Schutzfeldes 220 erfolgt durch eine Veränderung des Raumbereichs, den der Laserstrahl 130 (vgl. Fig. 1) abtastet.

Wenn der optische Sensor 100 als TOF-Kamera oder als FMCW-LIDAR-System ausgebildet ist, ist mittels des optischen Sensors 100 eine dreidimensionale Abtastung von Objekten 140 innerhalb des Überwachungsbereichs 150 möglich. Anhand der dreidimensionalen Messpunkte des optischen Sensors 100, die jeweiligen Objekten 140 zugeordnet werden können, ist der optische Sensor 100 ferner in der Lage, die Objekte 140 zu klassifizieren. Die nachgewiesenen Objekte 140 können somit beispielsweise anhand vorgegebener Konturen oder vorgegebener Bereiche für ihre Abmessungen bestimmten Objektklassen zugeordnet werden, beispielsweise einer Objektklasse "Person" oder einer Objektklasse "Fahrzeug". Mit anderen Worten ist der optische Sensor 100 ausgebildet, bei den nachgewiesenen Objekten 140 beispielsweise zwischen der Person 230 und dem Fahrzeug 232 zu unterscheiden und diese entsprechenden Objektklassen zuzuordnen.

Der Betrieb des Windrades 200 wird darüber hinaus in Abhängigkeit vom Vorhandensein bzw. der Dicke der Eisschicht an den Rotorblättern 212 gesteuert. Wenn eine Vereisung der Rotorblätter 212 nachgewiesen wird und die Dicke der Eisschicht einen vorbestimmten Wert überschreitet, kann das Windrad 200 abgeschaltet werden, um eine Gefährdung von Personen 230 und weiteren Objekten 140 innerhalb des Schutzfeldes 220 aufgrund eines sogenannten Eisbruchs zu vermeiden. Bei einem solchen Eisbruch löst sich die Eisschicht bzw. Eismasse von den Rotorblättern 212, so dass Eisstücke innerhalb des Schutzfeldes 220 auf den Boden herunterfallen und dadurch eine Gefahr für Personen 230 und andere Objekte 140 innerhalb des Schutzfeldes 220 darstellen.

Wenn jedoch nur eine geringe Eismasse bzw. dünne Eisschicht an den Rotorblättern 212 nachgewiesen wird und sich keine Personen 230 innerhalb des Schutzfeldes 220 befinden, kann das Windrad 200 weiterhin betrieben werden, auch wenn sich beispielsweise ein Fahrzeug 232 innerhalb des Schutzfeldes 220 befindet. In einem solchen Fall können keine oder nur geringfügige Schäden durch herabfallende Eisstücke erwartet werden. Wenn jedoch eine Person 230 innerhalb des Schutzfeldes 220 nachgewiesen wird, wird das Windrad 220 auch bei einer dünnen Eisschicht abgeschaltet, da bereits kleine Eisstücke beim Herunterfallen eine Gefahr für die Person 230 darstellen. Die Entscheidung über einen weiteren Betrieb des Windrades 200 hängt also gegebenenfalls von der Dicke der nachgewiesenen Eisschicht bzw. der nachgewiesenen Eismasse und von der Klassifizierung der Objekte 140 innerhalb des Schutzfelds 220 ab.

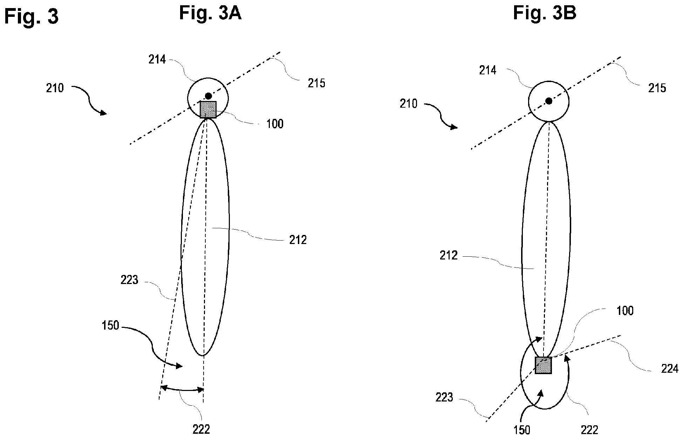

In Fig. 3 sind alternative Ausführungsformen für die Anbringung des optischen Sensors 100 an dem Windrad 200 schematisch dargestellt. Bei den beiden Ausführungsformen von Fig. 3A und 3B ist der optische Sensor 100 jeweils an einem der Rotorblätter 212 befestigt, so dass sich der optische Sensor 100 während des Betriebs des Windrades 200 zusammen mit dem Rotor 210 um dessen Drehachse 215 dreht.

Die Fig. 3A und 3B sind dabei als perspektivische Ansichten des Bereichs der Rotorblätter zu verstehen. In der jeweiligen Darstellung weist die Drehachse 215 schräg von rechts hinter der Figurenebene nach links vor der Figurenebene. Der optische Sensor 100 ist jeweils als Scanner ausgestaltet, wobei sich dessen Scanebene in derselben Richtung wie die Drehachse 215 schräg nach links vorne erstreckt. Die Scanrichtung ist jeweils durch den Doppelpfeil 222 angedeutet. Die gestrichelten Linien 223 in den Fig. 3A und 3B sind also jeweils aus der Figurenebene schräg nach vorne gerichtet, während die gestrichelte Linie 224 in der Fig. 3B schräg nach hinten gerichtet ist. Die gestrichelten Linien 223 bzw. 224 liegen in der jeweiligen Scanebene des als Scanner ausgestalteten optischen Sensors 100, die sich bei Drehung des Rotors 210 zusammen mit dem Rotorblatt 212 um die Drehachse 215 dreht.

Durch die Anordnung des als Scanner ausgestalteten optischen Sensors 100 am rotierenden Rotorblatt 212 dreht sich die Scanebene in den Anordnungen der Fig. 3A und B mit dem Rotor 210 mit. Die Rotordrehung bewirkt also automatisch das Überstreichen des Schutzfeldes unterhalb des Rotorblattes 212, im Gegensatz zur Anordnung der Fig. 2 mit feststehendem Sensor 100. Dort muss zum Überstreichen des Überwachungsbereiches 150 und somit des Schutzfeldes 220 eine zusätzliche Verschwenkung der Scanebene realisiert werden.

Bei der Ausführungsform von Fig. 3A ist der optische Sensor 100 an einem inneren Ende des Rotorblatts 212 in der Nähe der Rotorwelle 214 bzw. in der Nähe der Drehachse 215 des Rotors 210 angebracht. Der Überwachungsbereich 150 des optischen Sensors 150 umfasst daher eine Außenfläche des Rotorblatts 212, an welchem der optische Sensor 100 angebracht ist. Die hintere Fläche des Rotors kann hier nicht erfasst werden, außer es wäre hier zum Beispiel ein weiterer Sensor vorgesehen. Bei einer Drehung des Rotors 210 überstreift der Überwachungsbereich 150 des optischen Sensors 100 den Boden unterhalb des Windrades 200 periodisch während einer jeweiligen vorbestimmten Zeitdauer. Das Schutzfeld 220 (vgl. Fig. 2) unterhalb des Rotors 210 ist bei dieser Ausführungsform somit durch die Reichweite des optischen Sensors 100 bei dem periodischen Überstreifen des Bodens durch den Überwachungsbereich 150 festgelegt.

Bei der Ausführungsform von Fig. 3B ist der optische Sensor 100 hingegen an einem äußeren Ende des Rotorblatts 212 angebracht. Dieses äußere Ende des Rotorblatts 212 befindet sich an einer Spitze des Rotorblatts 212, welche die größte Entfernung von der Rotorwelle 214 bzw. der Drehachse 215 aufweist. Auch bei der Ausführungsform von Fig. 3B ist zumindest ein Teil bzw. Abschnitt des Rotorblatts 212 für den optischen Sensor 100 sichtbar, um die vorstehend beschriebene Überwachung des Rotorblatts 212 bezüglich Eis durchführen zu können, wie dies durch die gestrichelten Linien veranschaulicht ist.

Bei der Ausführungsform von Fig. 3B ist der optische Sensor 100 bzw. dessen Überwachungsbereich 150 zusätzlich Richtung Boden ausgerichtet, d.h. von dem Rotorblatt 212 weg, so dass der Überwachungsbereich 150 des optischen Sensors 100 ebenso wie bei der Ausführungsform von Fig. 3A den Boden unterhalb des Rotors 210 periodisch überstreicht und dadurch das Schutzfeld 220 festlegt. Die Ausführungsform von Fig. 3B hat den Vorteil, dass eine geringere Reichweite des optischen Sensors 100 als bei der Ausführungsform von Fig. 3A erforderlich ist, da sich der optische Sensor 100 im Betrieb des Windrades 200 näher am Boden befindet, wenn der Überwachungsbereich 150 des optischen Sensors 100 den Boden überstreicht. Ferner sind bei entsprechender Anordnung bzw. entsprechend ausgedehnter Scanebene (zum Beispiel bis zur Rückseite des Rotorblattes) auch Objekte auf der Rückseite des Rotorblatts 212 bei der Ausführungsform von Fig. 3B aufgrund der Anbringung des optischen Sensors 100 an der Spitze des Rotorblatts 212 für diesen sichtbar, während solche Objekte für die Ausführungsform von Fig. 3A (sofern nur ein Sensor vorhanden ist) nicht sichtbar sind.

### Bezugszeichenliste

- 100: optischer Sensor
- 110: Lichtquelle
- 120: Empfangs- und Auswertungseinheit
- 122: Empfangsteil
- 124: Auswertungsteil
- 126: Steuersignal
- 128: Ausgangssignal
- 130: emittiertes Licht bzw. Laserstrahl
- 140: Objekt
- 142: remittiertes bzw. reflektiertes Licht
- 150: Überwachungsbereich
- 152: Grenze des Überwachungsbereichs
- 154: Verschiebung des Laserstrahls
- 156: Reichweite des optischen Sensors
- 200: Windrad
- 210: Rotor
- 212: Rotorblatt
- 214: Rotorwelle
- 215: Drehachse
- 216: Halterung für den optischen Sensor
- 220: Schutzfeld
- 222: Scanrichtung
- 223, 224: gestrichelte Linien zur Verdeutlichung der Ausrichtung der Scanebene
- 230: Person
- 232: Fahrzeug
- 240: für den optischen Sensor sichtbarer Bereich am Rotorblatt

## Patentansprüche

1. Windrad (200), umfassend:
einen Rotor (210) mit mehreren Rotorblättern (212),
einen optischen Sensor (100), der umfasst:
eine Lichtquelle (110), die Licht (130) in einen vorbestimmten Überwachungsbereich (150) emittiert, und
eine Empfangs- und Auswertungseinheit (120), die ausgebildet ist, mindestens ein Objekt (140) innerhalb des Überwachungsbereichs (150) anhand von empfangenem Licht (142) nachzuweisen, das von der Lichtquelle (110) emittiert und von dem Objekt (140) remittiert wird,
wobei die Lichtquelle (110) ferner ausgebildet ist, Licht bei mindestens zwei verschiedenen Wellenlängen zu emittieren, und
wobei die Empfangs- und Auswertungseinheit (120) ferner ausgebildet ist, eine jeweilige Intensität des von dem Objekt (140) remittierten Lichts (142) für eine jeweilige der mindestens zwei Wellenlängen zu bestimmen und anhand eines Verhältnisses mindestens zweier Intensitäten bei unterschiedlichen Wellenlängen mindestens ein vorbestimmtes Material (160) an dem Objekt (140) nachzuweisen,
wobei sich während des Betriebs des Windrades (200) mindestens eines der mehreren Rotorblätter (212) zumindest zeitweise in dem Überwachungsbereich (150) des Sensors (100) befindet und der Sensor (100) dadurch in der Lage ist, das mindestens eine vorbestimmte Material (160) an dem mindestens einen der mehreren Rotorblätter (212) nachzuweisen, **dadurch gekennzeichnet, dass**
der optische Sensor (100) derart an dem Windrad (200) angebracht ist, dass der Überwachungsbereich (150) zumindest zeitweise ein vorbestimmtes Schutzfeld (220) unterhalb des Rotors (210) abdeckt.

2. Windrad (200)nach Anspruch 1, wobei
die Lichtquelle (110) des optischen Sensors (100) das Licht (130) bei mindestens zwei diskreten, vorbestimmten Wellenlängen emittiert und die Empfangs- und Auswertungseinheit (120) ferner ausgebildet ist, Licht (142) in einem Wellenlängenbereich nachzuweisen, der die mindestens zwei diskreten Wellenlängen der Lichtquelle (110) umfasst, oder
die Lichtquelle (110) das Licht (130) in einem Wellenlängenbereich emittiert und die Empfangs- und Auswertungseinheit (120) ferner ausgebildet ist, Licht (142) bei mindestens zwei diskreten, vorbestimmten Wellenlängen nachzuweisen, die innerhalb des Wellenlängenbereichs der Lichtquelle (110) liegen.

3. Windrad (200) nach Anspruch 2, wobei
die mindestens zwei diskreten, vorbestimmten Wellenlängen derart ausgewählt sind, dass die Empfangs- und Auswertungseinheit (120) in der Lage ist, anhand des Verhältnisses der mindestens zwei Intensitäten bei den mindestens zwei Wellenlängen mindestens zwei Arten des vorbestimmten Materials (160) an dem Objekt (140) nachzuweisen.

4. Windrad (200) nach Anspruch 3, wobei
der Sensor (100) so ausgestaltet ist, dass er in der Lage ist, die Remission von Licht bei Wasser und Eis als die verschiedenen Arten des Materials (160) zu detektieren.

5. Windrad (200) nach einem der Ansprüche 1 bis 4, wobei
die Empfangs- und Auswertungseinheit (120) ferner ausgebildet ist, ein Objekt (140) zu klassifizieren, wenn das Objekt (140) in dem Überwachungsbereich (150) des Sensors (100) nachweisbar ist.

6. Windrad (200) nach einem der Ansprüche 1 bis 5, wobei der optische Sensor (100) einen optischen Scanner, vorzugsweise einen Laserscanner umfasst, der insbesondere zur Abstandsmessung ausgebildet ist.

7. Windrad (200) nach einem der Ansprüche 1 bis 6, wobei
der optische Sensor (100) an einem statischen Element (214) des Windrades (200) angebracht ist.

8. Windrad (200) nach einem der Ansprüche 1 bis 6, wobei
der optische Sensor (100) an einem der mehreren Rotorblätter (212) angebracht ist.

9. Windrad (200) nach Anspruch 8, wobei
der optische Sensor (100) an einem inneren Ende eines der mehreren Rotorblätter (212) angebracht ist.

10. Windrad (200) nach Anspruch 8, wobei
der optische Sensor (100) an einem äußeren Ende eines der mehreren Rotorblätter (212) angebracht ist.

11. Windrad (200) nach einem der Ansprüche 1 bis 10, wobei
der optische Sensor (100) so ausgestaltet ist, dass er in der Lage ist, die Remission von Licht für Wasser und/oder Eis zu detektieren, wobei
der optische Sensor (100) vorzugsweise ferner derart ausgebildet ist, dass er in der Lage ist, eine Dicke einer Eisschicht an einem der mehreren Rotorblätter (212) unter Berücksichtigung einer Referenzmessung zu bestimmen.

12. Windrad (200) nach einem der Ansprüche 1 bis 11, wobei an mehreren, vorzugsweise an allen, Rotorblättern (212) ein optischer Sensor (100) vorgesehen ist.

13. Verfahren zum Betreiben eines Windrades (200) nach einem der Ansprüche 1 bis 12, wobei das Verfahren umfasst, dass mittels des optischen Sensors (100):
mindestens eines der Rotorblätter (212) des Rotors (210) des Windrades (200) bezüglich des Vorhandenseins eines vorbestimmten Materials (160), insbesondere von Eis, überwacht wird,
**dadurch gekennzeichnet, dass**
ein vorbestimmtes Schutzfeld (220) unterhalb des Rotors (210) des Windrades (200) bezüglich des Vorhandenseins mindestens eines Objekts (140) überwacht wird.

14. Verfahren nach Anspruch 13, wobei
bei Vorhandensein sowohl des vorbestimmten Materials (160), insbesondere von Eis, an dem mindestens einen Rotorblatt (212) als auch des mindestens einen Objekts (140) in dem Schutzfeld (220) ermittelt wird, ob das Windrad (200) abzuschalten ist.

## Claims

1. A wind turbine (200) comprising:
a rotor (210) having a plurality of rotor blades (212);
an optical sensor (100) which comprises:
a light source (110) which emits light (130) into a predetermined monitored zone (150), and
a receiving and evaluating unit (120) which is configured to detect at least one object (140) within the monitored zone (150) based on received light (142) which is emitted by the light source (110) and remitted by the object (140),
wherein the light source (110) is further configured to emit light at at least two different wavelengths, and
wherein the receiving and evaluating unit (120) is further configured to determine a respective intensity of the light (142) remitted by the object (140) for a respective one of the at least two wavelengths and to detect at least one predetermined material (160) at the object (140) based on a ratio of at least two intensities at different wavelengths,
wherein, during the operation of the wind turbine (200), at least one of the plurality of rotor blades (212) is located at least temporarily in the monitored zone (150) of the sensor (100) and the sensor (100) is thereby able to detect the at least one predetermined material (160) at the at least one of the plurality of rotor blades (212),
**characterized in that**
the optical sensor (100) is attached to the wind turbine (200) such that the monitored zone (150) at least temporarily covers a predetermined protected field (220) below the rotor (210).

2. A wind turbine (200) according to claim 1, wherein
the light source (110) of the optical sensor (100) emits the light (130) at at least two discrete, predetermined wavelengths, and the receiving and evaluating unit (120) is further configured to detect light (142) in a wavelength range which comprises the at least two discrete wavelengths of the light source (110), or
the light source (110) emits the light (130) in a wavelength range and the receiving and evaluating unit (120) is further configured to detect light (142) at at least two discrete, predetermined wavelengths which lie within the wavelength range of the light source (110).

3. A wind turbine (200) according to claim 2, wherein
the at least two discrete predetermined wavelengths are selected such that the receiving and evaluating unit (120) is capable of detecting at least two types of the predetermined material (160) at the object (140) based on the ratio of the at least two intensities at the at least two wavelengths.

4. A wind turbine (200) according to claim 3, wherein
the sensor (100) is designed such that it is capable of detecting the remission of light with water and ice as the different types of the material (160).

5. A wind turbine (200) according to any one of the claims 1 to 4, wherein
the receiving and evaluating unit (120) is further configured to classify an object (140) if the object (140) can be detected in the monitored zone (150) of the sensor (100).

6. A wind turbine (200) according to any one of the claims 1 to 5, wherein the optical sensor (100) comprises an optical scanner, preferably a laser scanner which is in particular configured for distance measurement.

7. A wind turbine (200) according to any one of the claims 1 to 6, wherein the optical sensor (100) is attached to a static element (214) of the wind turbine (200).

8. A wind turbine (200) according to any one of the claims 1 to 6, wherein the optical sensor (100) is attached to one of the plurality of rotor blades (212).

9. A wind turbine (200) according to claim 8, wherein
the optical sensor (100) is attached to an inner end of one of the plurality of rotor blades (212).

10. A wind turbine (200) according to claim 8, wherein
the optical sensor (100) is attached to an outer end of one of the plurality of rotor blades (212).

11. A wind turbine (200) according to any one of the claims 1 to 10, wherein the optical sensor (100) is designed such that it is capable of detecting the remission of light for water and/or ice, wherein
the optical sensor (100) is preferably further configured such that it is capable of determining a thickness of an ice layer at one of the plurality of rotor blades (212) taking into account a reference measurement.

12. A wind turbine (200) according to any one of the claims 1 to 10, wherein an optical sensor (100) is provided at a plurality of rotor blades (212), preferably at all the rotor blades.

13. A method of operating a wind turbine (200) according to any one of the claims 1 to 12, wherein the method comprises that by means of the optical sensor (100):
at least one of the rotor blades (212) of the rotor (210) of the wind turbine (200) is monitored with respect to the presence of a predetermined material (160), in particular ice,
**characterized in that**
a predetermined protected field (220) below the rotor (210) of the wind turbine (200) is monitored with respect to the presence of at least one object (140).

14. A method according to claim 13, wherein,
if both the predetermined material (160), in particular ice, is present at the at least one rotor blade (212) and the at least one object (140) is present in the protected field (220), it is determined whether the wind turbine (200) is to be switched off.

## Revendications

1. Éolienne (200) comprenant :
un rotor (210) muni de plusieurs pales de rotor (212),
un capteur optique (100) comprenant :
une source lumineuse (110) qui émet de la lumière (130) dans une zone de surveillance prédéterminée (150), et
une unité de réception et d'évaluation (120) qui est conçue pour détecter au moins un objet (140) à l'intérieur de la zone de surveillance (150) à l'aide de la lumière reçue (142) émise par la source lumineuse (110) et renvoyée par l'objet (140),
dans laquelle
la source lumineuse (110) est en outre conçue pour émettre de la lumière à au moins deux longueurs d'onde différentes, et
l'unité de réception et d'évaluation (120) est en outre conçue pour déterminer une intensité respective de la lumière (142) renvoyée par l'objet (140) pour chacune desdites au moins deux longueurs d'onde et pour détecter au moins une matière prédéterminée (160) sur l'objet (140) à l'aide d'un rapport entre au moins deux intensités à différentes longueurs d'onde,
pendant le fonctionnement de l'éolienne (200), au moins l'une desdites plusieurs pales de rotor (212) se trouve au moins temporairement dans la zone de surveillance (150) du capteur (100), et le capteur (100) est ainsi en mesure de détecter ladite au moins une matière prédéterminée (160) sur ladite au moins une pale desdites plusieurs pales de rotor (212),
**caractérisée en ce que**
le capteur optique (100) est monté sur l'éolienne (200) de telle sorte que la zone de surveillance (150) couvre au moins temporairement un champ de protection prédéterminé (220) situé sous le rotor (210).

2. Éolienne (200) selon la revendication 1,
dans laquelle la source lumineuse (110) du capteur optique (100) émet la lumière (130) à au moins deux longueurs d'onde discrètes prédéterminées, et l'unité de réception et d'évaluation (120) est en outre conçue pour détecter la lumière (142) dans une plage de longueurs d'onde qui comprend lesdites au moins deux longueurs d'onde discrètes de la source lumineuse (110), ou
la source lumineuse (110) émet la lumière (130) dans une plage de longueurs d'onde, et l'unité de réception et d'évaluation (120) est en outre conçue pour détecter la lumière (142) à au moins deux longueurs d'onde discrètes prédéterminées qui se situent dans la plage de longueurs d'onde de la source lumineuse (110).

3. Éolienne (200) selon la revendication 2,
dans laquelle lesdites au moins deux longueurs d'onde discrètes prédéterminées sont choisies de telle sorte que l'unité de réception et d'évaluation (120) est en mesure de détecter au moins deux types de matière prédéterminée (160) sur l'objet (140) à l'aide du rapport entre lesdites au moins deux intensités auxdites au moins deux longueurs d'onde.

4. Éolienne (200) selon la revendication 3,
dans laquelle le capteur (100) est conçu de manière à être en mesure de détecter le renvoi de la lumière, sachant que les différents types de matière (160) sont de l'eau et de la glace.

5. Éolienne (200) selon l'une des revendications 1 à 4,
dans laquelle l'unité de réception et d'évaluation (120) est en outre conçue pour classifier un objet (140) lorsque l'objet (140) est détectable dans la zone de surveillance (150) du capteur (100).

6. Éolienne (200) selon l'une des revendications 1 à 5,
dans laquelle le capteur optique (100) comprend un scanner optique, de préférence un scanner laser, qui est conçu en particulier pour mesurer la distance.

7. Éolienne (200) selon l'une des revendications 1 à 6,
dans laquelle le capteur optique (100) est monté sur un élément statique (214) de l'éolienne (200).

8. Éolienne (200) selon l'une des revendications 1 à 6,
dans laquelle le capteur optique (100) est monté sur l'une desdites plusieurs pales de rotor (212).

9. Éolienne (200) selon la revendication 8,
dans laquelle le capteur optique (100) est monté à une extrémité intérieure de l'une desdites plusieurs pales de rotor (212).

10. Éolienne (200) selon la revendication 8,
dans laquelle le capteur optique (100) est monté à une extrémité extérieure de l'une desdites plusieurs pales de rotor (212).

11. Éolienne (200) selon l'une des revendications 1 à 10,
dans laquelle le capteur optique (100) est conçu de manière à être en mesure de détecter le renvoi de lumière en cas d'eau et/ou de glace,
de préférence, le capteur optique (100) est en outre conçu de manière à être en mesure de déterminer l'épaisseur d'une couche de glace sur l'une desdites plusieurs pales de rotor (212) en tenant compte d'une mesure de référence.

12. Éolienne (200) selon l'une des revendications 1 à 11,
dans laquelle un capteur optique (100) est prévu sur plusieurs, de préférence sur toutes les pales de rotor (212).

13. Procédé pour faire fonctionner une éolienne (200) selon l'une des revendications 1 à 12, le procédé consistant à surveiller, au moyen du capteur optique (100) :
au moins l'une des pales de rotor (212) du rotor (210) de l'éolienne (200) quant à la présence d'une matière prédéterminée (160), en particulier de la glace,
**caractérisé en ce que**
un champ de protection prédéterminé (220) situé sous le rotor (210) de l'éolienne (200) est surveillé quant à la présence d'au moins un objet (140).

14. Procédé selon la revendication 13,
dans lequel, en présence à la fois de matière prédéterminée (160), en particulier de la glace, sur ladite au moins une pale de rotor (212), et dudit au moins un objet (140) dans le champ de protection (220), il est déterminé si l'éolienne (200) doit être arrêtée.
